# EUROPÄISCHE PATENTSCHRIFT

(11) **EP 1 801 645 B1**
(45) Veröffentlichungstag und Bekanntmachung des Hinweises auf die Patenterteilung: **02.12.2009**
(21) Anmeldenummer: 06026810.9
(22) Anmeldetag: 22.12.2006
(51) Int. Cl.: G03B 1/22, G03B 27/53, H04N 1/00

(54) **Filmtransportvorrichtung**
Film transport device
Dispositif d'avancement du film

(30) Priorität: 23.12.2005 DE 102005061993
(43) Veröffentlichungstag der Anmeldung: 27.06.2007
(73) Patentinhaber: ARNOLD & RICHTER CINE TECHNIK GMBH & CO. BETRIEBS KG, 80799 München (DE)
(72) Erfinder: Cieslinski, Michael, 82008 Unterhaching (DE)
(74) Vertreter: Manitz, Finsterwald & Partner GbR

(56) Entgegenhaltungen:
- EP-A- 0 576 371
- WO-A-96/19751
- DE-C1- 368 260
- GB-A- 669 639
- JP-A- 3 129 353
- US-A- 5 529 232

## Beschreibung

Die Erfindung betrifft eine Filmtransportvorrichtung zum Transportieren eines Laufbildfilms, insbesondere zur Verwendung in einem Filmbelichter.

Ein Filmbelichter wird üblicherweise verwendet, um digital bearbeitete Bilddaten auf fotografischem Filmmaterial auszubelichten, um letztlich den Laufbildfilm bzw. eine hiervon erstellte Kopie später im Kino zeigen zu können. Dabei ist es wichtig, dass die Bildlage von aufeinander folgenden Einzelbildern möglichst konstant bleibt, da sich sonst das wahrgenommene Bild bei der Projektion im Kino bewegt. Besonders wichtig ist es bei einem derartigen Filmbelichter auch, dass zwischen zueinander benachbarten belichteten Bildpunkten ein konstanter Abstand eingehalten wird; anderenfalls können in dem belichteten Bild wahrnehmbare Intensitätsunterschiede entstehen, die sich beispielsweise bei einer zeilenweise erfolgenden Bildbelichtung als Streifenmuster bemerkbar machen. Zur Positionierung des Films werden im Projektor Perforationslöcher verwendet, die an einer oder beiden Längsseiten des Films ausgebildet sind. Die im Kino wahrgenommene Bildlage ist daher die Position des Bildes relativ zur Position der Perforationslöcher. Um eine gute relative Bildlage zu gewährleisten, werden üblicherweise Registrierstifte in die Perforationslöcher des Films eingeführt, und der Film wird dadurch positioniert.

Grundsätzlich kann zwischen Filmbelichtern unterschieden werden, die ein Bild belichten, während der Film in Ruhe ist, und solchen, die das Bild Zeile für Zeile schreiben, während der Film bewegt wird. Bei letzteren, insbesondere Laserbelichtern, wird der Film beispielsweise mit Registrierstiften in einem Filmhalter auf einem Linearschlitten fixiert. Nach dem Einführen der Registrierstifte in die Perforationslöcher beschleunigt der Linearschlitten auf die richtige Geschwindigkeit zum Belichten eines Bildes. Das Belichten erfolgt dann zeilenweise bei konstanter Geschwindigkeit des Linearschlittens. Anschließend wird der Linearschlitten wieder abgebremst, die Registrierstifte werden aus den Positionslöchern entfernt und der Linearschlitten wird in die Ausgangsposition zurückgefahren. Durch dieses Konstruktionsprinzip (Linearschlitten mit Pinregistrierung) wird eine hohe Bildlagegenauigkeit bei allerdings geringem Durchsatz (belichtete Bilder pro Zeiteinheit) erreicht, da während der Schritte des Beschleunigens, des Abbremsens und des Zurückfahrens des Linearschlittens keine Bilder belichtet werden.

Aus der US 5529232 A ist eine Filmtransportvorrichtung für einen Filmbelichter (Projektor, digitaler Scanner oder Ausbelichter, Telecine) gemäß dem Oberbegriff des Patentanspruchs 1 bekannt. Bei dieser Filmtransportvorrichtung sind an einer Transporttrommel zum rotatorischen Führen eines Films ein erstes Paar von Registrierstiften und ein zweites Paar von Registrierstiften angeordnet. Das erste Paar von Registrierstiften und das zweite Paar von Registrierstiften werden nacheinander in jeweils zugeordnete Perforationslöcher des Films eingeführt. Das erste Paar von Registrierstiften umfasst einen Stift mit feststehender Position und einen Stift, der seitlich nach außen vorgespannt ist. Das zweite Paar von Registrierstiften umfasst zwei Stifte, die entgegen der Filmtransportrichtung vorgespannt sind. Hierdurch wird der Film lagegenau fixiert.

Die EP 576371 A beschreibt eine Filmtransportvorrichtung mit einer Transporttrommel, die ein Filmfenster aufweist und intermittierend gedreht wird. Ein erster, zweiter und dritter Registrierstift können in ein jeweils zugeordnetes Perforationsloch des Films eingreifen. Der erste und der zweite Registrierstift dienen zum Ausrichten des Films in Längsrichtung. Der dritte Registrierstift ist in einer schrägen Richtung vorgespannt, um den Film lagegenau zu fixieren.

Die WO 96/ 19751 A offenbart eine Filmtransportvorrichtung, die an Scheiben beweglich angeordnete Greifer aufweist. Greiferspitzen können durch das Zusammenwirken von Mitnehmern mit einer Kulissenführung der Scheiben in die Perforationslöcher eines Films temporär eingeführt werden, um den Film zu transportieren. Die Kontur der Kulissenführung ist derart gestaltet, dass die Greiferspitzen genau dann in die Perforationslöcher des Films eingreifen und den Film transportieren, wenn der Film nicht mit Licht beaufschlagt wird.

Aus der GB 669 639 A ist ein intermittierend arbeitender Filmtransportmechanismus bekannt, der eine Transporttrommel mit beweglichen Greifern aufweist, wobei die Greifer temporär in den Transportweg des Filmes eingeführt werden, um den Film zu transportieren. Die Trommel wird durch einen Hebel, der mit einem Stift der Trommel zusammenwirkt, zu einer oszillierenden Bewegung angetrieben.

Der Erfindung liegt die Aufgabe zugrunde, eine Filmtransportvorrichtung zu schaffen, die eine lagegenaue Fixierung eines Films gewährleistet und gleichzeitig durch effizienten Filmtransport einen hohen Durchsatz beispielsweise in einem Filmbelichter ermöglicht.

Diese Aufgabe wird durch eine Filmtransportvorrichtung mit einer drehbaren Transporttrommel mit den Merkmalen des Anspruchs 1 gelöst, und insbesondere dadurch, dass die Transporttrommel bewegliche Registrierstifte aufweist, die an der Transporttrommel in ein jeweiliges Perforationsloch des Films temporär einführbar sind, um den Film lagegenau zu fixieren, wobei eine Belichtungseinheit vorgesehen ist, durch die die Einzelbilder des Laufbildfilms mit einer Belichtungspause zwischen aufeinander folgenden Einzelbildern belichtet werden, wobei eine Steuervorrichtung vorgesehen ist, durch die die Registrierstifte derart ansteuerbar sind, dass das Einführen der Registrierstifte in das jeweilige Perforationsloch des Films während der Belichtungspause zwischen einem jeweiligen Belichten von zwei aufeinander folgenden Einzelbildern des Laufbildfilms erfolgt, und wobei eine Drehantriebseinrichtung vorgesehen ist, durch die die Transporttrommel und der mittels der Transporttrommel geführte Film zu einer kontinuierlichen Bewegung angetrieben werden.

Die erfindungsgemäße Filmtransportvorrichtung besitzt also eine Transporttrommel, die drehbar gelagert ist. Die Transporttrommel weist antreibbare Registrierstifte auf, die zeitweise aus der Mantelfläche der Transporttrommel ausgerückt oder in diese zurückgezogen werden können. Zum Transport des Films werden die Registrierstifte ausgefahren und greifen in den Transportweg der Filmbahn ein. Zweckmäßigerweise werden die Registrierstifte in Perforationslöcher eingeführt, die an einer oder beiden Längsseiten des Films angeordnet sind. Somit kann durch eine Drehung der Transporttrommel der Film gezogen und hierdurch transportiert werden.

Durch die in die Perforationslöcher temporär eingeführten Registrierstifte wird sichergestellt, dass der Film auf der Oberfläche der Transporttrommel korrekt positioniert ist, insbesondere in einer bezüglich der Drehbewegung der Transporttrommel tangentialen Richtung. Mit anderen Worten ist gewährleistet, dass der an der Transporttrommel anliegende Längsabschnitt des Films bezüglich der Trommel praktisch keine Relativbewegung durchführt. Bildlagefehler können somit zuverlässig vermieden werden.

Transporttrommeln zum Filmtransport sind zwar grundsätzlich bekannt, beispielsweise im Zusammenhang mit Filmscannern, die das Bild zeilenweise abtasten (Telecine). Derartige Trommeln sind jedoch mit feststehenden Zähnen versehen, die in die Perforationslöcher des Films eintauchen.

Bei diesen bekannten Transporttrommeln ist die Filmpositionierung wesentlich ungenauer, da beim Eintauchen der Zähne in die Perforationslöcher der Film über die Zahnflanken rutscht und sich somit relativ zu der Transporttrommel geringfügig bewegt. Der Erfindung liegt die Erkenntnis zugrunde, dass bereits diese geringfügige Relativbewegung die Gefahr birgt, dass der Zeilenabstand von einzeln belichteten Zeilen nicht genau genug eingehalten wird und dadurch bei der Belichtung benachbarte Zeilen sich teilweise überlappen können, was bei der Projektion zu den bereits erläuterten streifigen Bildern führen kann.

Die erfindungsgemäße Filmtransportvorrichtung umfasst eine Steuervorrichtung, die dafür sorgt, dass die Registrierstifte zu einem Zeitpunkt eingeführt werden, zu dem keine Belichtung des Films erfolgt. Mit anderen Worten ist der Zeitpunkt für das Einführen der Registrierstifte derart gewählt, dass ein damit verbundenes eventuelles Versetzen des Films relativ zu der Transporttrommel keinen Einfluss auf die Qualität der belichteten Bilder hat. Eine durch das Filmformat vorgegebene Belichtungspause zwischen dem Belichten von zwei aufeinander folgenden Einzelbildern wird daher vorteilhafterweise genutzt, um den Film exakt auf der Transporttrommel zu positionieren und zu fixieren.

Besonders vorteilhaft ist die Verwendung einer derartigen Filmtransportvorrichtung demnach in einem Filmbelichter, da hier besonders hohe Anforderungen an die Genauigkeit der Bildlage gestellt werden. Da sich der Film auf der Transporttrommel nicht mehr bewegen kann, hängt die Genauigkeit der Bildlage somit nur von der Genauigkeit der Trommelbewegung ab und ist daher vergleichbar hoch wie bei dem Konstruktionsprinzip eines Linearschlittens mit Pinregistrierung. Allerdings lässt sich demgegenüber ein verbesserter Belichtungsdurchsatz erzielen, insbesondere wenn die Transporttrommel kontinuierlich gedreht wird.

Bei der erfindungsgemäßen Filmtransportvorrichtung erfolgt der Transport des Films kontinuierlich, d. h. die Transporttrommel wird von einer Drehantriebseinrichtung zu einer kontinuierlichen Drehbewegung angetrieben. Eine derartige Ausgestaltung des Antriebs erhöht wesentlich den Durchsatz beispielsweise eines Filmbelichters, da im Gegensatz zu dem Konstruktionsprinzip des Linearschlittens mit Pinregistrierung während des ganzen Prozesses ein stetiger Fortschritt gewährleistet wird.

Gemäß einer bevorzugten Ausführungsform sind die Registrierstifte senkrecht zur Mantelfläche der Transporttrommel, d. h. in radialer Richtung, beweglich. Die Registrierstifte können hierdurch schnell und schonend in die Filmbahn eingeführt werden und den Film gegen Verrutschen sichern.

Weiterhin ist es bevorzugt, wenn jedem Registrierstift ein weiterer Registrierstift zugeordnet ist, wobei diese Registrierstifte derart angeordnet sind, dass sie paarweise in die Perforationslöcher an den beiden Längsseiten des Films eingeführt werden können. Die Registrierstifte eines solchen Stiftepaars sind synchron zueinander beweglich, d.h. sie sind beispielsweise gleichzeitig beidseitig in die Perforationslöcher des Films einführbar oder zurückziehbar. Dies hat eine verbesserte Führung und Positionierung des Films auf der Mantelfläche der Transporttrommel zur Folge.

Gemäß einer vorteilhaften Weiterbildung der Erfindung sind die Registrierstifte in mehrere Gruppen unterteilt. Die Registrierstifte der verschiedenen Gruppen sind zu unterschiedlichen Zeitpunkten aus der Mantelfläche der Transporttrommel ausrückbar und greifen somit beispielsweise zeitlich versetzt zueinander oder alternierend in den Transportweg des Films ein. Eine derartige gruppenweise Unterteilung der Registrierstifte vereinfacht das für das Antreiben und gegenseitige Synchronisieren der Registrierstifte erforderliche Antriebssystem. Zu diesem Zweck ist es auch bevorzugt, wenn die Registrierstifte einer Gruppe gleichzeitig aus der Mantelfläche der Transporttrommel ausrückbar oder in diese zurückziehbar sind.

Ferner kann bei der genannten Weiterbildung vorgesehen sein, dass die Registrierstifte einer Gruppe mechanisch gekoppelt sind. Damit wird auf einfache Weise sichergestellt, dass die Registrierstifte einer Gruppe zu fest definierten Zeitpunkten ausrückbar bzw. zurückziehbar sind.

Weiterhin ist es bevorzugt, wenn die Registrierstifte mit einer Einrichtung betätigt werden, die koaxial zu der Drehachse der Transporttrommel angetrieben wird. Eine derartige Anordnung der Betätigungseinrichtung stellt eine besonders einfache und zuverlässige Konstruktionsweise dar. Insbesondere kann vorgesehen sein, dass die Registrierstifte mittels einer Betätigungsstange bewegt werden, die koaxial zu der Drehachse der Transporttrommel angeordnet ist.

Die Registrierstifte sind mit der zugeordneten Betätigungseinrichtung vorzugsweise über Hebel und Gelenke verbunden. Dies ist mechanisch einfach zu realisieren, ermöglicht aber dennoch eine präzise Steuerung der Registrierstifte.

Gemäß einer weiteren bevorzugten Ausführungsform ist eine Fixiereinrichtung vorgesehen, die den Film auf einem Teil der Mantelfläche der Transportrolle zusätzlich fixiert, insbesondere durch eine bezüglich der Drehachse der Transporttrommel im Wesentlichen radiale Krafteinwirkung.

Eine vorteilhafte Ausführungsform einer derartigen Fixiereinrichtung umfasst Anpressriemen, die den Film im Randbereich außerhalb der Einzelbilder an die Transporttrommel andrücken. Diese Anpressriemen werden vorzugsweise umlaufend geführt und sichern durch den auf den Film ausgeübten Druck den Film zusätzlich gegen Verrutschen.

Alternativ oder zusätzlich wird der Film durch Unterdruck an die Transporttrommel angesaugt. Dazu ist die Mantelfläche der Transporttrommel mit Bohrungen versehen, die mit dem Innenraum der Transporttrommel in Verbindung stehen. Im Innenraum der Transporttrommel wird auch der Unterdruck bereitgestellt bzw. erzeugt.

Die genannten Vorrichtungen zur zusätzlichen Fixierung des Films führen zu einer weiteren Verbesserung der Bildlagegenauigkeit der Filmtransporteinrichtung. Auch wird dadurch einem möglicherweise unvollständigen flächigen Aufliegen des Films auf der Transporttrommel zusätzlich entgegengewirkt. Vor allem kann der Film hierdurch über lose Schlaufen zu der Transporttrommel geführt werden, wodurch die Transporttrommel frei von äußeren Kräften bleibt.

Die Erfindung betrifft weiterhin einen Filmbelichter mit einer Filmtransportvorrichtung gemäß einer der beschriebenen Ausführungsformen. Ein solcher Filmbelichter liefert einen hohen Durchsatz bei gleichzeitig hoher Bildlagequalität.

In einer besonders bevorzugten Ausführungsform eines derartigen Filmbelichters wird der Film auf der Transporttrommel belichtet. Mit anderen Worten findet die Belichtung, insbesondere mit einem Laserstrahl, in einem Bereich des Films statt, der auf der Transporttrommel aufliegt und durch die Registrierstifte fixiert ist. Dadurch wird die erforderliche Genauigkeit der Bildlage gewährleistet. Ein derartiger Filmbelichter vereinigt somit die Vorteile einer hohen Bildlagegenauigkeit durch Pinregistrierung mit einem hohen Durchsatz durch die Verwendung einer Transporttrommel mit kontinuierlichem Antrieb.

Die Erfindung betrifft ferner ein Verfahren zum Transportieren eines Laufbildfilms mittels einer rotierenden Transporttrommel, insbesondere in einem Filmbelichter, wobei die Transporttrommel bewegliche Registrierstifte aufweist, wobei jeweils wenigstens einer der Registrierstifte in ein Perforationsloch des Filmes temporär eingeführt wird, um den Film lagegenau zu fixieren, wobei die Einzelbilder des Laufbildfilms mit einer Belichtungspause zwischen aufeinander folgenden Einzelbildern belichtet werden, wobei der betreffende Registrierstift während der Belichtungspause zwischen einem jeweiligen Belichten von zwei aufeinander folgenden Einzelbildern des Filmes in die Perforationslöcher eingeführt wird, und wobei die Transporttrommel und der mittels der Transporttrommel geführte Film zu einer kontinuierlichen Bewegung angetrieben werden.

Dieses Verfahren zeichnet sich also dadurch aus, dass zumindest einer der Registrierstifte zeitweise in ein Perforationsloch des Films eingeführt wird. Dadurch wird die korrekte Positionierung des Films auf der Transporttrommel sichergestellt und der Film zuverlässig gegen Verrutschen gesichert, wie dies bereits im Zusammenhang mit der erfindungsgemäßen Transportvorrichtung erläutert worden ist.

Erfindungsgemäß wird das Einführen der Registrierstifte in die Perforationslöcher zeitlich derart gesteuert, dass dies während einer Pause zwischen einem Belichten von zwei aufeinander folgenden Einzelbildern erfolgt. Der Vorteil hiervon liegt in der Minimierung der mechanischen Störungen des Films während des Belichtens. Während des Belichtungsvorgangs sind die in die Perforationslöcher eingeführten Registrierstifte daher relativ zur Transporttrommel weitgehend in Ruhe.

Außerdem kann bei diesem Verfahren der Film auch dadurch besonders gut an der Trommel fixiert werden, indem entlang des Umfangs der Transporttrommel mehrere Registrierstifte gleichzeitig in zugeordnete Perforationslöcher des Films eingeführt werden.

Weiterhin ist es bevorzugt, wenn die Belichtung des Films auf der Transporttrommel erfolgt, d.h. dann erfolgt, wenn der Film auf der Transporttrommel flächig aufliegt und hinreichend genau positioniert ist.

Ferner kann vorgesehen sein, dass der Film in einem Bereich belichtet wird, der in Transportrichtung hinter dem den Film ziehenden und fixierenden Registrierstift liegt. Durch diese zeitliche Abfolge, d. h. Einführen der Registrierstifte und Ziehen des Films bis zur Belichtungsstelle mit anschließender Belichtung, wird ein hoher Durchsatz an belichteten Bildern pro Zeiteinheit bei hoher Lagegenauigkeit der einzelnen Bilder erzielt.

Weitere vorteilhafte Ausführungsformen der Erfindung sind in den Unteransprüchen, der Beschreibung und den Zeichnungen angegeben.

Die Erfindung wird nachfolgend lediglich beispielhaft unter Bezugnahme auf die Zeichnungen erläutert.
- Fig. 1: zeigt einen Filmbelichter in einer schematischen Seitenansicht.
- Fig. 2: zeigt einen Abschnitt eines Laufbildfilms in einer Draufsicht.
- Fig. 3: zeigt eine Filmtransporttrommel in einer schematischen Querschnittsansicht parallel zur Filmtransportrichtung.
- Fig. 4a und 4b: zeigen eine Filmtransporttrommel in einer schematischen Querschnittsansicht entlang der Ebene AA-AA' bzw. entlang der Ebene BB-BB' gemäß Fig. 3.
- Fig. 4c und 4d: zeigen eine Transporttrommel in einer schematischen Queransicht entlang der Ebene CC-CC' bzw. entlang der Ebene AA-AA' gemäß Fig. 3, also nach einer Weiterbewegung der Transporttrommel gegenüber Fig. 4a und b um eine Achteldrehung.
- Fig. 5: zeigt eine perspektivische Ansicht einer Transporttrommel.
- Fig. 6: zeigt eine Filmtransporttrommel in einer schematischen Querschnittsansicht senkrecht zur Filmtransportrichtung mit einer Ausführungsform der Drehantriebseinrichtung der Transporttrommel.

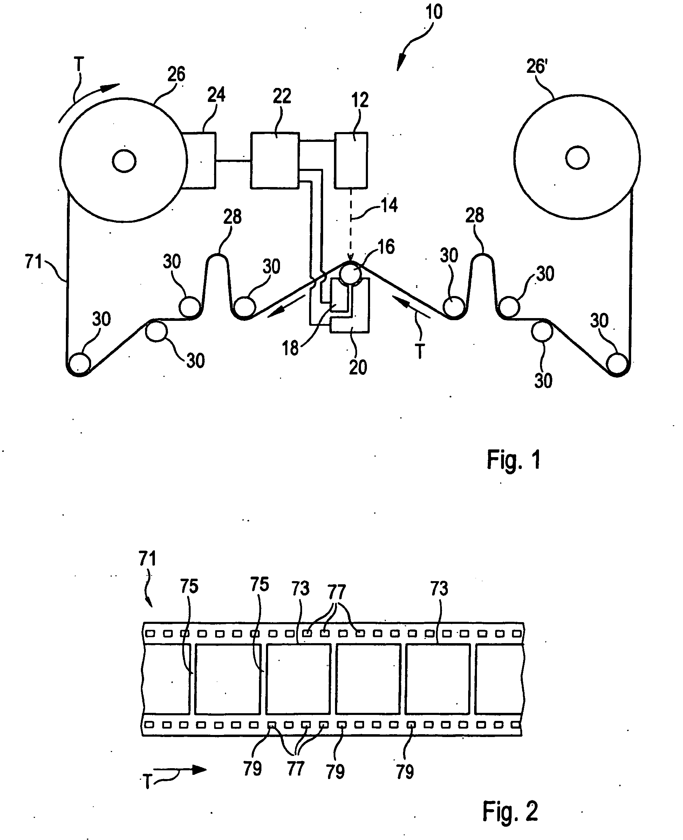

Fig. 1 illustriert eine mögliche Verwendung einer Filmtransportvorrichtung der erläuterten Art. Es ist ein Filmbelichter 10 mit einer Belichtungseinheit 12 dargestellt, wobei die Belichtungseinheit 12 eine Lichtquelle (nicht gezeigt) aufweist. Die Belichtungseinheit 12 kann auch ein optisches System (nicht gezeigt) umfassen, welches einen belichtenden Lichtstrahl 14 in geeigneter Weise auf einen Laufbildfilm (im Folgenden auch mit Film bezeichnet) 71 lenkt. Das optische System kann auch den Lichtstrahl formende optische Elemente umfassen. Der Film 71 wird in einem Bereich belichtet, in dem der Film auf einem Teil einer Transporttrommel 16 aufliegt. Das Ausbelichten des Films 71 kann beispielsweise durch drei Laser mit den Grundfarben Rot, Grün und Blau erfolgen.

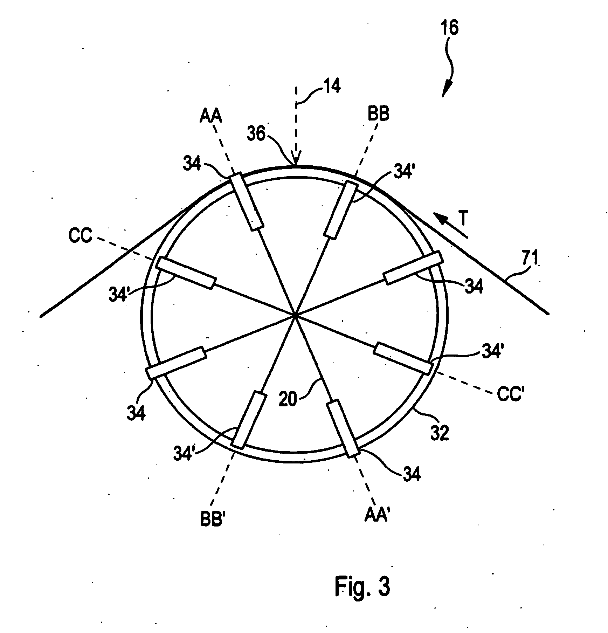

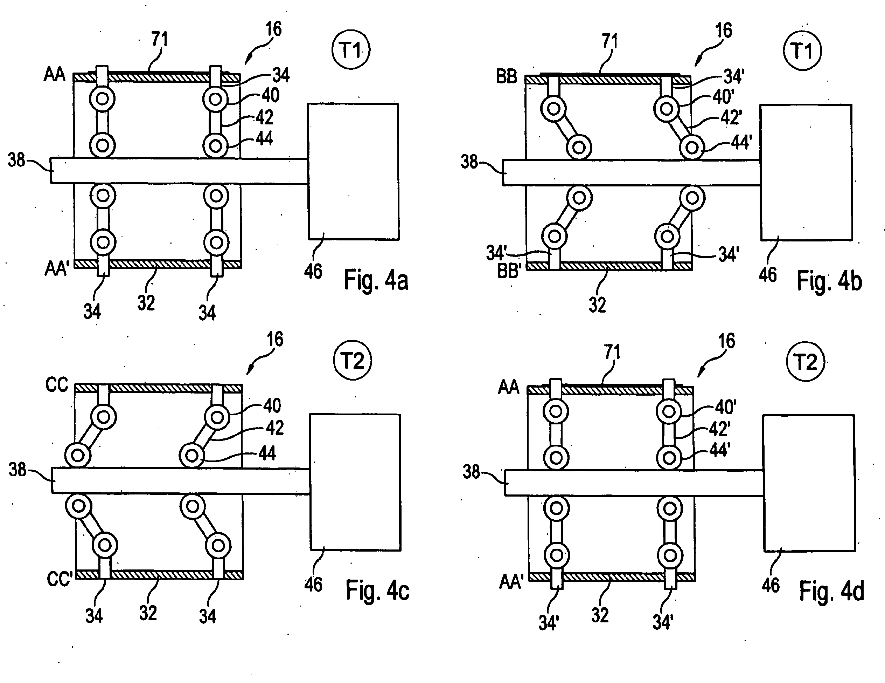

Die Transporttrommel 16 wird von einer Drehantriebseinrichtung 18 zu einer Drehbewegung angetrieben. Der Transporttrommel 16 ist außerdem eine Betätigungseinrichtung 20 zugeordnet, die bewegliche Registrierstifte 34, 34' (hier nicht gezeigt) aus der Mantelfläche der Transporttrommel 16 ausrückt bzw. in diese zurückzieht. Eine Ausführungsform zur Steuerung der Registrierstifte 34, 34' wird später anhand der Fig. 3 und 4a bis 4d genauer beschrieben. Sowohl die Belichtungseinheit 12 als auch die Drehantriebseinrichtung 18 und die Betätigungseinrichtung 20 sind mit einer Steuerschaltung 22 verbunden. Die Steuerschaltung 22 weist auch eine Verbindung zu einem Wickelspulenantrieb 24 auf.

Der Film 71 wird zwischen zwei Wickelspulen 26 und 26' unter Ausbildung zweier Ausgleichsschleifen 28 entlang mehrerer Umlenkrollen 30 geführt. Die Wickelspule 26 wird von dem Wickelspulenantrieb 24 angetrieben. Durch die Wirkung des Wickelspulenantriebs 24 und der Drehantriebseinrichtung 18 der Transporttrommel 16 wird der Film 71 in einer Transportrichtung T bewegt.

Wie bereits erwähnt erfolgt die Belichtung des Films 71 auf der Transporttrommel 16. Der Film 71 wird dazu kontinuierlich durch eine von der Drehantriebseinrichtung 18 erzeugte Drehbewegung der Transportrolle 16 bewegt, während der Film von dem Lichtstrahl 14 belichtet wird. Diese Belichtung wird in dem gezeigten Ausführungsbeispiel zeilenweise durchgeführt. Durch hier nicht gezeigte Registrierstifte 34, 34' wird der Film 71 auf der Transporttrommel 16 fixiert. Das Einführen der Registrierstifte 34, 34' in die Filmbahn erfolgt mittels der genannten Betätigungseinrichtung 20. Die Steuerschaltung 22 sorgt für eine Synchronisation des Wickelspulenantriebs 24 und der Drehantriebseinrichtung 18 mit der Betätigungseinrichtung 20. Außerdem werden mittels der Steuerschaltung 22 der Vortrieb des Films 71 und die Belichtung durch die Belichtungseinheit 12 synchronisiert. Die exakte Abstimmung des Vortriebs des Films mit der Belichtung (oder umgekehrt) ist wichtig für die Qualität der Ausbelichtung. Die korrekte Lage des Films auf der Transporttrommel muss zu jedem Zeitpunkt gewährleistet sein, um eine zuverlässige Belichtung mit hoher Positionstreue durchführen zu können. Durch einen stetigen und gleichförmigen Transport des Films 71 werden die Synchronisation vereinfacht und ein hoher Durchsatz gewährleistet.

Fig. 2 zeigt in einer Draufsicht einen Abschnitt eines Films 71. Der Film 71 besitzt in einer äquidistanten Anordnung entlang seiner Längsrichtung mehrere Bildbereiche 73, die jeweils einem belichteten oder zu belichtenden Einzelbild des Films entsprechen. Zwei benachbarte Bildbereiche 73 sind durch einen jeweiligen Trennbereich 75 voneinander getrennt. An den beiden Längsseiten des Films 71 ist eine jeweilige regelmäßige Anordnung von Perforationslöchern 77 vorgesehen.

Gemäß gängigen Normen ist jedem Bildbereich 73 ein Referenzperforationsloch 79 zugeordnet, wobei dieses Referenzperforationsloch 79 in Höhe des in Transportrichtung T benachbarten Bildbereichs 73 angeordnet ist. Diese Normierung hat den Sinn, dass für das Aufzeichnen und ein nachfolgendes Abspielen des Films 71 mit unterschiedlichen Geräten eine feste Relativlage zwischen einem Bildbereich 73 und einer Einrichtung definiert ist, die den Film 71 fixiert. Dadurch ist ein konstanter Bildstand gewährleistet, so dass es beim Abspielen der Sequenz von Bildbereichen 73 nicht zu einem Bildversatz kommt.

Nachfolgend werden die Ausgestaltung und die Funktion der bereits erwähnten Registrierstifte 34, 34' näher erläutert.

In Fig. 3 ist eine Transporttrommel 16 in einer schematischen Querschnittsansicht parallel zur Filmtransportrichtung T dargestellt. In der Darstellung gemäß Fig. 3 wird der Film 71 von rechts nach links bewegt. Er liegt in einem bestimmten Bereich (Winkelsegment) auf einer Mantelfläche 32 der Transporttrommel 16 auf. Die Transporttrommel 16 weist radial ausgerichtete und bewegliche Registrierstifte 34, 34' auf. In dem in Fig. 3 gezeigten Zustand sind die Registrierstifte 34 aus der Trommelmantelfläche 32 ausgerückt, während die Registrierstifte 34' in diese zurückgezogen sind. In dieser Ausführungsform sind also zwei Gruppen von Registrierstiften 34 bzw. 34' realisiert, die gleichzeitig - jedoch gegensinnig zueinander - bewegt werden. Die Registrierstifte 34, 34' sind hierfür mit der Betätigungseinrichtung 20 verbunden, die hier nur schematisch dargestellt ist und genauer in den Fig. 4a bis 4d gezeigt ist. Diese zeigen Schnittansichten entlang der Linien AA-AA', BB-BB' und CC-CC' gemäß Fig. 3.

Lediglich einer der ausgerückten Registrierstifte 34 (bzw. ein Stiftepaar, vgl. nachstehend) dient temporär zum Fixieren des Films 71 an der Transporttrommel 16 und somit zum Übertragen einer tangentialen Zugkraft von der Transporttrommel 16 auf den Film 71. Die Registrierstifte 34, 34' sind in einer solchen Teilung vorgesehen, dass der Umfangsabschnitt der Trommelmantelfläche 32 zwischen zwei benachbarten Registrierstiften 34 und 34' (oder 34' und 34) genau der Periodizität der Längsanordnung der zu belichtenden Bildbereiche 73 des Films 71 entspricht (Fig. 2). Mit anderen Worten greifen die aufeinander folgenden Registrierstifte 34, 34', 34 etc. nacheinander in jedes vierte Perforationsloch 77 des in Fig. 2 gezeigten Films 71 ein, nämlich lediglich in die Referenzperforationslöcher 79.

Durch den momentan in die Filmbahn eingreifenden Registrierstift 34 (Fig. 3) wird somit gewährleistet, dass der Film 71 während einer Belichtung auf der Trommelmantelfläche 32 korrekt positioniert und zuverlässig fixiert ist. Bei der weiter andauernden Drehung der Transporttrommel 16 löst sich ein soeben belichteter Bildbereich des Films 71 wieder von der Trommelmantelfläche 32, und der betreffende Registrierstift 34 wird wieder in die Trommelmantelfläche 32 zurückgezogen, während gleichzeitig der nächste Registrierstift 34' ausgerückt wird. Die Registrierstifte 34, 34' werden also nur zeitweise in die Perforationslöcher 77 des Films 71 eingeführt.

Im Betrieb der Filmtransportvorrichtung, während die Drehantriebseinrichtung 18 die Transporttrommel 16 zu einer kontinuierlichen Drehbewegung mit konstanter Winkelgeschwindigkeit antreibt, wird der Film 71 in der Darstellung gemäß Fig. 3 von rechts unten zunächst nach oben über die Transporttrommel 16 und schließlich nach links unten geführt. Durch diese Art der Führung wird im Scheitelpunkt des Filmverlaufs eine radial in Richtung der Drehachse der Transporttrommel 16 wirkende Kraftkomponente hervorgerufen. Dadurch wird der Film 71 an die Trommelmantelfläche 32 angedrückt und liegt somit stets flächig auf der Oberfläche der Transporttrommel 16 auf. Ein unvollständiges Aufliegen und damit verbundene Unebenheiten der Bildbereiche 73, die beispielsweise aus einer Längswölbung des Films 71 resultieren können (so genannter Curl) und die beim Belichten unerwünschte Abbildungsfehler hervorrufen könnten, werden hierdurch wirksam vermieden.

Man beachte, dass am oberen Schnittpunkt der Linie AA-AA' mit der Trommelmantelfläche 32 der Registrierstift 34 aus der Trommelmantelfläche 32 ausgerückt ist. Bezüglich dieses Schnittpunkts entgegen der Transportrichtung T versetzt wird der Film 71 durch den Lichtstrahl 14 an einer Belichtungsstelle 36 zeilenweise belichtet, während der Film 71 von dem genannten ausgerückten Registrierstift 34 gezogen wird.

Erst im Anschluss an das Ausbelichten eines Bildbereichs 73 wird der nächste Registrierstift 34 oder 34' in ein Perforationsloch 77, insbesondere in ein Referenzperforationsloch 79, eingeführt. Das Einführen des Stifts erfolgt in einer Belichtungspause zwischen dem Belichten der betreffenden zwei Bildbereiche 73. Mit anderen Worten wird ein Registrierstift 34 oder 34' dann in ein Perforationsloch 77 (insbesondere Referenzperforationsloch 79) eingeführt, wenn sich der Trennbereich 75 zwischen zwei Bildbereichen 73 (Fig. 2) an der Belichtungsstelle 36 (Fig. 3) befindet. Durch eine geeignete Synchronisation kann die Belichtungseinheit 12 inaktiv sein, wenn der Trennbereich 73 die Belichtungsstelle 36 durchläuft.

Bei einer derartigen zeitlichen Abstimmung des Einführens der Registrierstifte 34, 34' mit dem Belichtungsvorgang hat ein etwaiges Verrutschen des Filmes 71 aufgrund des Einführens der Registrierstifte 34, 34' keinen oder allenfalls einen vernachlässigbaren Einfluss auf die Bildqualität, da während dieses Zeitraums, wie bereits erläutert, der Film 71 nicht belichtet wird. Nach dem Einführvorgang - also während des Belichtens - sind die Registrierstifte 34, 34' relativ zu der Trommelmantelfläche 32 in Ruhe.

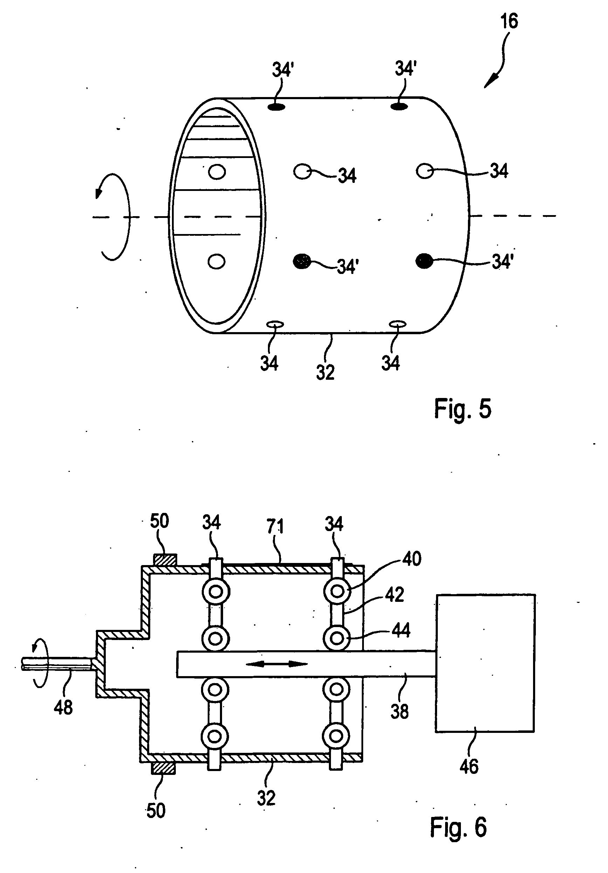

Es wird noch darauf hingewiesen, dass in der Schnittansicht gemäß Fig. 3 zwar jeweils nur einer der Registrierstifte 34, der in die Filmbahn eingeführt ist, zu sehen ist. Jedem Registrierstift 34, 34' ist jedoch ein weiterer Registrierstift zugeordnet, der parallel zur Drehachse der Transporttrommel 16 versetzt ist, so dass stets an beiden Längsseiten des Films 71 ein Stift angreift. Zusammen bilden diesen beiden Registrierstifte 34 und 34' ein mechanisch gekoppeltes Stiftepaar. Dies ist auch aus Fig. 5 ersichtlich.

Ferner soll noch darauf hingewiesen werden, dass zumindest die filmführenden Bereiche der Trommelmantelfläche 32 lichtabsorbierend ausgebildet sein können. Da nicht das gesamte belichtende Licht von dem Film 71 absorbiert wird, tritt ein gewisser Teil dieses Lichts durch die Filmbahn. Eine Reflexion dieses Lichts an der Trommelmantelfläche 32 kann zu parasitären Belichtungseffekten (z. B. Lichthöfe) führen, die nach Möglichkeit zu vermeiden sind. Dazu kann die Trommelmantelfläche 32 lichtabsorbierend ausgebildet sein (z.B. durch Schwärzen, Sintern oder eine sonstige Oberflächenbehandlung) oder mit lichtabsorbierendem Material versehen sein. Alternativ kann durch feine Bohrungen in der Trommelmantelfläche 32 das Licht von der Außenfläche der Trommelmantelfläche 32 weg in das Innere der Transporttrommel 16 geleitet werden.

Um die Funktionsweise einer Ausführungsform der bereits genannten Betätigungseinrichtung 20 zu verdeutlichen, werden im Folgenden die Fig. 4a bis 4d genauer beschrieben.

Fig. 4a zeigt eine Querschnittsansicht der Transporttrommel 16 senkrecht zur Filmtransportrichtung entlang der Linie AA-AA' (siehe Fig. 3) zu einem Zeitpunkt T1. Die Registrierstifte 34 sind zu diesem Zeitpunkt ausgerückt und ragen aus der Trommelmantelfläche 32 heraus. Die Registrierstifte 34, 34' sind mit einer Betätigungsstange 38 gekoppelt, und zwar über Registrierstiftgelenke 40, Verbindungselemente 42 und Verbindungselementgelenke 44. Die Betätigungsstange 38 ist koaxial zu der Drehachse der Transporttrommel 16 angeordnet. Sie kann durch einen Linearantrieb 46 in einer zur Trommelmantelfläche 32 parallelen Richtung vor und zurück bewegt werden.

In Fig. 4b ist eine Querschnittsansicht der Transporttrommel 16 entlang der Linie BB-BB' (Fig. 3) zu demselben Zeitpunkt T1 dargestellt. Die Registrierstifte 34' sind in einer in die Trommelmantelfläche 32 zurückgezogenen Stellung. Man beachte, dass die den Registrierstiften 34' jeweils zugeordneten Verbindungselemente 42' an der Betätigungsstange 38 an einem anderen Längsabschnitt angelenkt sind als die Verbindungselemente 42 nach Fig. 4a. Während die Verbindungselemente 42 zum Zeitpunkt T1 senkrecht zu der Betätigungsstange 38 ausgerichtet sind, verlaufen die Verbindungselemente 42' schräg zu der Betätigungsstange 38.

Fig. 4c zeigt die gleichen Bauteile wie in Fig. 4a, jedoch zu einem späteren Zeitpunkt T2. Die Transporttrommel 16 ist zu diesem Zeitpunkt um ein Achtel einer vollen Umdrehung weiter gedreht worden. Die durch die Linie AA-AA' definierte Schnittebene nach Fig. 4a befindet sich nun parallel zur Linie CC-CC' (vgl. Fig. 3). Die in Fig. 4a noch aus der Trommelmantelfläche 32 herausragenden Registrierstifte 34 sind nun in die Trommelmantelfläche 32 zurückgezogen. Durch eine zwischenzeitlich erfolgte axiale Bewegung der Betätigungsstange 38 - man beachte, dass die Betätigungsstange 38 linksseitig weiter aus der Transporttrommel 16 herausragt als in Fig. 4a - sind die Registrierstifte 34 mittels der Registrierstiftgelenke 40, der Verbindungselemente 42 und der Verbindungselementgelenke 44 radial in die Transporttrommel 16 zurückgezogen worden.

Analog stellt Fig. 4d die Bauteile aus Fig. 4b zum Zeitpunkt T2 dar. Auf grund der erläuterten axialen Bewegung der Betätigungsstange 38 ragen die Registrierstifte 34' nun aus der Trommelmantelfläche 32 heraus und fixieren den Film 71 auf einem Teil der Trommelmantelfläche 32 gegen Verrutschen bzw. ermöglichen durch Eingriff in die Filmbahn deren Transport. Die Verbindungselemente 42' sind nun senkrecht zu der Betätigungsstange 38 ausgerichtet.

Der in den Fig. 4a bis 4d dargestellte Linearantrieb 46 für die Betätigungsstange 38 kann auf verschiedene alternative Arten realisiert sein und kann insbesondere auch in die Transporttrommel 16 integriert sein. Der Antrieb der Betätigungsstange 38 kann beispielsweise durch einen Tauchspulenantrieb erfolgen. Eine weitere Möglichkeit ist die Verwendung eines Moving-Magnet Motors, bei dem ein Magnet mit der Betätigungsstange 38 verbunden ist. Die Betätigungsstange 38 wir dabei über eine Wechselwirkung eines durch eine Spule erzeugten Magnetfeldes mit dem Magneten bewegt. Die Spule kann dann außerhalb der Transporttrommel 16 angeordnet sein. Da dieser Antrieb nicht mitdrehend ist, würden Schleifringe für die Stromzuführung des Motors entfallen.

Anstelle der Verwendung einer Betätigungsstange 38 können die Registrierstifte 34, 34' beispielsweise vorgespannt angeordnet sein, so dass sie ohne Einwirkung zusätzlicher Kräfte in die Trommelmantelfläche 32 zurückgezogen sind. Durch eine geeignet ausgebildete Kulissenführung können die Registrierstifte 34, 34' dann zeitweise in den Transportweg des Films entlang der Transporttrommel 16 eingeführt werden (in den Figuren nicht gezeigt).

Fig. 5 zeigt eine perspektivische Ansicht der Transporttrommel 16. Die gestrichelte Linie stellt die Drehachse der Transporttrommel 16 dar. Besonders hervorzuheben ist die beidseitige Anordnung der Registrierstifte 34, 34', die ein Einführen der Registrierstifte 34 und 34' in die Perforationslöcher 77 an den beiden Längsseiten des Films 71 gestattet. Zwei gegenüberliegende Registrierstifte 34, 34' an den Außenseiten der Transporttrommel 16 bilden ein Stiftepaar, wobei die Stifte eines Paares zweckmä-βigerweise synchron in die Filmbahn eingeführt werden.

In Fig. 6 ist in der linken Hälfte der Übertragungsweg einer Drehbewegung von der zugeordneten Drehantriebseinrichtung 18 (vgl. Fig. 1) zu der Transporttrommel 16 dargestellt. Eine einseitig ausgebildete Trommelachse 48 dient als Antriebswelle eines (nicht dargestellten) Motors. Es sind aber auch andere Antriebsmöglichkeiten denkbar. So kann die Trommel auch über einen Riemen 50 angetrieben werden.

### Bezugszeichenliste

- 10: Filmbelichter
- 12: Belichtungseinheit
- 14: Lichtstrahl
- 16: Transporttrommel
- 18: Drehantriebseinrichtung
- 20: Betätigungseinrichtung
- 22: Steuerschaltung
- 24: Wickelspulenantrieb
- 26, 26': Wickelspule
- 28: Ausgleichsschleifen
- 30: Umlenkrolle
- T: Transportrichtung
- 32: Trommelmantelfläche
- 34, 34': Registrierstifte
- 36: Belichtungsstelle
- 38: Betätigungsstange
- 40, 40': Registrierstiftgelenk
- 42, 42': Verbindungselement
- 44, 44': Verbindungselementgelenk
- 46: Linearantrieb
- 48: Trommelachse
- 50: Antriebsriemen
- 71: Laufbildfilm
- 73: Bildbereich
- 75: Trennbereich
- 77: Perforationsloch
- 79: Referenzperforationsloch

## Patentansprüche

1. Filmtransportvorrichtung zum Transportieren eines Laufbildfilms (71), insbesondere in einem Filmbelichter, mit einer drehbaren Transporttrommel (16) zur rotatorischen Führung des Films, wobei die Transporttrommel (16) bewegliche Registrierstifte (34, 34') aufweist, die an der Transporttrommel in ein jeweiliges Perforationsloch (77) des Filmes (71) temporär einführbar sind, um den Film lagegenau zu fixieren, wobei eine Belichtungseinheit (12) vorgesehen ist, durch die die Einzelbilder (73) des Laufbildfilms (71) mit einer Belichtungspause zwischen aufeinander folgenden Einzelbildern (73) belichtet werden, und wobei eine Steuervorrichtung (22) vorgesehen ist, durch die die Registrierstifte (34, 34') derart ansteuerbar sind, dass das Einführen der Registrierstifte in das jeweilige Perforationsloch (77) des Films während der Belichtungspause zwischen einem jeweiligen Belichten von zwei aufeinander folgenden Einzelbildern (73) des Laufbildfilms erfolgt,
**dadurch gekennzeichnet,**
**dass** eine Drehantriebseinrichtung (18) vorgesehen ist, durch die die Transporttrommel (16) und der mittels der Transporttrommel (16) geführte Film zu einer kontinuierlichen Bewegung angetrieben werden.

2. Filmtransportvorrichtung nach Anspruch 1,
**dadurch gekennzeichnet,**
**dass** die Registrierstifte (34, 34') bezüglich der Drehachse der Transporttrommel (16) in radialer Richtung beweglich sind.

3. Filmtransportvorrichtung nach Anspruch 1 oder 2,
**dadurch gekennzeichnet,**
**dass** jedem Registrierstift (34 oder 34') parallel zur Drehachse der Transporttrommel (16) versetzt ein weiterer Registrierstift (34 bzw. 34') zugeordnet ist, um ein Stiftepaar zu bilden, wobei zumindest die beiden Registrierstifte eines Stiftepaars synchron zueinander beweglich sind.

4. Filmtransportvorrichtung nach einem der vorhergehenden Ansprüche,
**dadurch gekennzeichnet,**
**dass** die Registrierstifte (34 bzw. 34') in mehrere Gruppen unterteilt sind, wobei die Registrierstifte der verschiedenen Gruppen zu unterschiedlichen Zeitpunkten in den Transportweg des Films einführbar sind.

5. Filmtransportvorrichtung nach Anspruch 4,
**dadurch gekennzeichnet,**
**dass** die Registrierstifte (34 bzw. 34') einer Gruppe gleichzeitig antreibbar sind,
und/oder
**dass** die Registrierstifte (34 bzw. 34') einer Gruppe für eine zueinander synchrone Bewegung mechanisch gekoppelt sind.

6. Filmtransportvorrichtung nach einem der vorhergehenden Ansprüche,
**dadurch gekennzeichnet,**
**dass** die Registrierstifte (34, 34') mit einer Betätigungseinrichtung (20) gekoppelt sind, die entlang einer Bewegungsrichtung antreibbar ist, welche koaxial zu der Drehachse der Transporttrommel (16) ist.

7. Filmtransportvorrichtung nach Anspruch 6,
**dadurch gekennzeichnet,**
**dass** die Registrierstifte (34, 34') mit der Betätigungseinrichtung (20) über Hebel gelenkig gekoppelt sind,
und/oder
**dass** die Betätigungseinrichtung (20) eine Betätigungsstange (38) aufweist, die koaxial zu der Drehachse der Transporttrommel (16) angeordnet ist.

8. Filmtransportvorrichtung nach einem der vorhergehenden Ansprüche,
**gekennzeichnet durch**
eine Fixiereinrichtung, welche den Film bezüglich der Drehachse der Transporttrommel (16) in radialer Richtung an der Transporttrommel fixiert.

9. Filmtransportvornchtung nach Anspruch 8,
**dadurch gekennzeichnet,**
**dass** die Fixiereinrichtung zwei umlaufend geführte Anpressriemen aufweist, die jeweils an einer Längsseite des an der Transporttrommel (16) aufliegenden Films anliegen, oder
**dass** die Fixiereinrichtung zur Bereitstellung eines Unterdrucks im Innenraum der Transporttrommel (16) ausgebildet ist, wobei entlang der Mantelfläche der Transporttrommel mehrere Bohrungen zum Ansaugen des Films vorgesehen sind.

10. Filmtransportvorrichtung nach einem der vorhergehenden Ansprüche,
**dadurch gekennzeichnet,**
**dass** die filmführende Oberfläche der Transporttrommel (16) lichtabsorbierend ausgebildet ist.

11. Filmbelichter zur Belichtung eines Laufbildfilms (71), mit einer Filmtransportvorrichtung nach einem der vorhergehenden Ansprüche.

12. Filmbelichter nach Anspruch 11,
**gekennzeichnet durch**
eine Belichtungseinrichtung, **durch** die ein auf der Transporttrommel (16) aufliegender Bereich des Films mit Licht (14), insbesondere mit einem Laserstrahl, beaufschlagbar ist.

13. Verfahren zum Transportieren eines Laufbildfilms mittels einer rotierenden Transporttrommel, insbesondere in einem Filmbelichter, wobei die Transporttrommel (16) bewegliche Registrierstifte (34, 34') aufweist, wobei jeweils wenigstens einer der Registrierstifte (34, 34') in ein Perforationsloch (77) des Filmes temporär eingeführt wird, um den Film lagegenau zu fixieren, wobei die Einzelbilder (73) des Laufbildfilms (71) mit einer Belichtungspause zwischen aufeinander folgenden Einzelbildern (73) belichtet werden, und wobei der betreffende Registrierstift (34, 34') während der Belichtungspause zwischen einem jeweiligen Belichten von zwei aufeinander folgenden Einzelbildern (73) des Filmes in die Perforationslöcher (77) eingeführt wird,
**dadurch gekennzeichnet,**
**dass** die Transporttrommel (16) und der mittels der Transporttrommel (16) geführte Film zu einer kontinuierlichen Bewegung angetrieben werden.

14. Verfahren nach Anspruch 13,
**dadurch gekennzeichnet,**
**dass** der Film mit Licht (14), insbesondere Laserstrahlung, beaufschlagt wird, während der Film (71) auf der Transporttrommel (16) aufliegt und durch den wenigstens einen Registrierstift (34, 34') lagegenau fixiert wird.

15. Verfahren nach Anspruch 14,
**dadurch gekennzeichnet,**
**dass** ein Bereich des Films mit Licht (14) beaufschlagt wird, der bezüglich des Registrierstifts (34, 34'), der den Film momentan lagegenau fixiert, entgegen der Drehrichtung der Transporttrommel (16) versetzt angeordnet ist.

## Claims

1. A film transport device for transporting a motion picture film (71), in particular in a film recorder, having a rotatable transport drum (16) for the rotary guidance of the film, wherein the transport drum (16) has movable registration pins (34, 34') which can be temporarily introduced into a respective perforated hole (77) of the film (71) at the transport drum to precisely fix the position of the film, wherein a recorder unit (12) is provided by which the individual frames (73) of the motion picture film (71) are exposed to light with an exposure pause between sequential individual frames (73), and wherein a control device (22) is provided by which the registration pins (34, 34') can be controlled such that the introduction of the registration pins into the respective perforation hole (77) of the film takes place during the exposure pause between a respective exposure to light of two sequential individual frames (73) of the motion picture film,
**characterized in that**
a rotary drive device (18) is provided by which the transport drum (16) and the film guided by means of the transport drum (16) are driven to make a continuous movement.

2. A film transport device in accordance with claim 1, **characterized in that** the registration pins (34, 34') are movable in a radial direction with respect to the axis of rotation of the transport drum (16).

3. A film transport device in accordance with claim 1 or claim 2, **characterized in that** with each registration pin (34 or 34') there is associated a further registration pin (34 or 34') offset parallel to the axis of rotation of the transport drum (16) to form a pin pair, with at least the two registration pins of a pin pair being movable synchronously with one another.

4. A film transport device in accordance with any one of the preceding claims, **characterized in that** the registration pins (34 or 34') are divided into a plurality of groups, with the registration pins of the different groups being able to be introduced into the transport path of the film at different times.

5. A film transport device in accordance with claim 4, **characterized in that** the registration pins (34 or 34') of a group can be driven simultaneously;
and/or
**in that** the registration pins (34 or 34') of a group are mechanically coupled for a movement synchronous with one another.

6. A film transport device in accordance with any one of the preceding claims, **characterized in that** the registration pins (34, 34') are coupled to an actuation device (20) which can be driven along a direction of movement which is coaxial to the axis of rotation of the transport drum (16).

7. A film transport device in accordance with claim 6, **characterized in that** the registration pins (34, 34') are coupled in an articulated manner to the actuation device (20) via levers;
and/or **in that** the actuation device (20) has an actuation bar (38) which is arranged coaxially to the axis of rotation of the transport drum (16).

8. A film transport device in accordance with any one of the preceding claims, **characterized by** a fixing device which fixes the film to the transport drum in a radial direction with respect to the axis of rotation of the transport drum (16).

9. A film transport device in accordance with claim 8 **characterized in that** the fixing device has two pressure belts guided peripherally which each contact a longitudinal side of the film lying on the transport drum (16);
or
**in that** the fixing device is made for the provision of a negative pressure in the inner space of the transport drum (16), with a plurality of bores being provided along the jacket surface of the transport drum to suck on the film.

10. A film transport device in accordance with any one of the preceding claims, **characterized in that** the film-guiding surface of the transport drum (16) is made light-absorbing.

11. A film recorder for the exposure to light of a motion picture film (71) comprising a film transport device in accordance with one of the preceding claims.

12. A film recorder in accordance with claim 11, **characterized by** an exposure device by which a region of the film lying on the transport drum (16) can be acted on by light (14), in particular by a laser beam.

13. A method for transporting a motion picture film by means of a rotating transport drum, in particular in a film recorder, wherein the transport drum (16) has movable registration pins (34, 34'), wherein at least one of the registration pins (34, 34') is in each case temporarily introduced into a perforation hole (77) of the film to precisely fix the position of the film, wherein the individual frames (73) of the motion picture film are exposed to light with an exposure pause between sequential individual frames (73), and wherein the respective registration pin (34, 34') is introduced into the perforation holes (77) during the exposure pause between a respective exposure to light of two sequential individual frames (73) of the film, **characterized in that**
the transport drum (16) and the film guided by means of the transport drum (16) are driven to make a continuous movement.

14. A method in accordance with claim 13, **characterized in that** the film is acted on by light (14), in particular by laser radiation, while the film (71) is lying on the transport drum (16) and is precisely fixed in position by the at least one registration pin (34, 34').

15. A method in accordance with claim 14, **characterized in that** a region of the film is acted on by light (14) which is arranged offset opposite to the direction of rotation of the transport drum (16) with respect to the registration pin (34, 34') which precisely fixes the position of the film instantaneously.

## Revendications

1. Dispositif de transport de film pour transporter un film cinématographique (71), en particulier dans un appareil à exposer les films, comprenant un tambour de transport rotatif (16) pour le guidage du film en rotation, ledit tambour de transport (16) comprenant des tiges de concordance déplaçables (34, 34') qui sont susceptibles d'être introduites temporairement sur le tambour de transport dans un trou de perforation respectif (77) du film (71), afin de fixer le film à une position exacte, dans lequel est prévue une unité d'exposition (12) par laquelle les images individuelles (73) du film cinématographique (71) sont exposées avec une pause d'exposition entre des images individuelles mutuellement successives (73), et dans lequel est prévu un dispositif de commande (22) par lequel les tiges de concordance (34, 34') peuvent être pilotées de telle façon que l'introduction des tiges de concordance dans le trou de perforation respectif (77) a lieu pendant la pause d'exposition entre une exposition respective de deux images individuelles mutuellement successives (73) du film cinématographique,
**caractérisé en ce qu'**il est prévu un système d'entraînement en rotation (18) au moyen duquel le tambour de transport (16) et le film guidé au moyen du tambour de transport (16) sont entraînés en un mouvement continu.

2. Dispositif de transport de film selon la revendication 1,
**caractérisé en ce que** les tiges de concordance (34, 34') sont déplaçables en direction radiale par rapport à l'axe de rotation du tambour de transport (16).

3. Dispositif de transport de film selon la revendication 1 ou 2,
**caractérisé en ce qu'**à chaque tige de concordance (34 ou 34') est associée une autre tige de concordance (34 ou 34') décalée parallèlement à l'axe de rotation du tambour de transport (16), afin de former une paire de tiges, de sorte qu'au moins les deux tiges de concordance d'une paire de tiges sont déplaçables de façon synchrone l'une par rapport à l'autre.

4. Dispositif de transport de film selon l'une des revendications précédentes,
**caractérisé en ce que** les tiges de concordance (34 ou 34') sont subdivisées en plusieurs groupes, les tiges de concordance des groupes différents pouvant être introduites à des instants différents dans le trajet de transport du film.

5. Dispositif de transport de film selon la revendication 4,
**caractérisé en ce que** les tiges de concordance (34 ou 34') d'un groupe sont susceptibles d'être entraînées simultanément,
et/ou **en ce que** les tiges de concordance (34 ou 34') d'un groupe sont couplées mécaniquement pour un mouvement synchrone les unes par rapport aux autres.

6. Dispositif de transport de film selon l'une des revendications précédentes,
**caractérisé en ce que** les tiges de concordance (34, 34') sont couplées à un système d'actionnement (20), lequel peut être entraîné le long d'une direction de déplacement coaxiale à l'axe de rotation du tambour de transport (16).

7. Dispositif de transport de film selon la revendication 6,
**caractérisé en ce que** les tiges de concordance (34, 34') sont couplées de façon articulée au système d'actionnement (20) via des leviers,
et/ou **en ce que** le système d'actionnement (20) comprend une barre d'actionnement (38) qui est agencée coaxialement à l'axe de rotation du tambour de transport (16).

8. Dispositif de transport de film selon l'une des revendications précédentes,
**caractérisé par** un moyen de fixation, qui fixe le film sur le tambour de transport en direction radiale par rapport à l'axe de rotation du tambour de transport (16).

9. Dispositif de transport de film selon la revendication 8,
**caractérisé en ce que** le moyen de fixation comprend deux courroies de pressage guidées en recirculation, qui sont appliquées chacune sur un côté longitudinal du film appliqué sur le tambour de transport (16), ou en ce que le moyen de fixation est réalisé pour produire une dépression dans la chambre intérieure du tambour de transport (16), et plusieurs perçages sont prévus le long de la surface enveloppe du tambour de transport pour aspirer le film.

10. Dispositif de transport de film selon l'une des revendications précédentes,
**caractérisé en ce que** la surface du tambour de transport (16) destinée à guider le film est réalisée de manière à absorber la lumière.

11. Appareil d'exposition pour exposer un film cinématographique (71), comprenant un dispositif de transport de film selon l'une des revendications précédentes.

12. Appareil d'exposition de film selon la revendication 11,
**caractérisé par** un moyen d'exposition au moyen duquel une région d'un film appliqué sur le tambour de transport (16) peut être illuminée avec de la lumière (14), en particulier avec un rayon laser.

13. Procédé pour transporter un film cinématographique au moyen d'un tambour de transport en rotation, en particulier dans un appareil d'exposition de film, dans lequel le tambour de transport (16) comprend des tiges de concordance mobiles (34, 34'), dans lequel au moins une des tiges de concordance (34, 34') peut respectivement être introduite temporairement dans un trou de perforation (77) du film, afin de fixer le film en position exacte, dans lequel les images individuelles (73) du film cinématographique (71) sont exposées avec une pause d'exposition entre des images individuelles mutuellement successives (73), et dans lequel la tige de concordance concernée (34, 34') est introduite dans les trous de perforation (77) pendant la pause d'exposition entre une exposition respective de deux images individuelles mutuellement successives (73) du film,
**caractérisé en ce que** le tambour de transport (16) et le film guidé au moyen du tambour de transport (16) sont entraînés en un mouvement continu.

14. Procédé selon la revendication 13, **caractérisé en ce que** le film est illuminé avec de la lumière (14), en particulier un rayon laser, pendant que le film (71) est appliqué sur le tambour de transport (16) et est fixé en position exacte par ladite au moins une tige de concordance (34, 34').

15. Procédé selon la revendication 14,
**caractérisé en ce qu'**une zone du film est illuminée avec de la lumière (14), cette zone étant agencée en décalage à l'encontre du sens de rotation du tambour de transport (16) par rapport à la tige de concordance (34, 34') qui fixe momentanément le film en position exacte.
